# EUROPÄISCHE PATENTSCHRIFT

(11) **EP 1 728 007 B1**
(45) Veröffentlichungstag und Bekanntmachung des Hinweises auf die Patenterteilung: **18.01.2012**
(21) Anmeldenummer: 05716266.1
(22) Anmeldetag: 22.03.2005
(51) Int. Cl.: F16H 3/78

(54) **PLANETENGETRIEBE, INSBESONDERE DOPPELKUPPLUNGSGETRIEBE IN PLANETENBAUWEISE**
PLANETARY TRANSMISSION, ESPECIALLY DUAL-CLUTCH PLANETARY TRANSMISSION
TRANSMISSION A TRAINS PLANETAIRES, NOTAMMENT TRANSMISSION A EMBRAYAGE DOUBLE A TRAINS PLANETAIRES

(30) Priorität: 23.03.2004 DE 102004014082
(43) Veröffentlichungstag der Anmeldung: 06.12.2006
(73) Patentinhaber: ZF Friedrichshafen AG, 88038 Friedrichshafen (DE)
(72) Erfinder: ZIEMER, Peter, 88069 Tettnang (DE)
(86) Internationale Anmeldenummer: PCT/EP2005/002997
(87) Internationale Veröffentlichungsnummer: WO 2005/093291

(56) Entgegenhaltungen:
- EP-A- 1 389 696
- EP-A- 1 435 477
- DE-A1- 3 131 138
- US-A1- 2003 199 360
- US-B1- 6 524 208

## Beschreibung

Die Erfindung betrifft ein Planetengetriebe, insbesondere ein Doppelkupplungsgetriebe in Planetenbauweise mit mehreren Planetenradsätzen, mit wenigstens zwei reibschlüssigen Schaltelementen und mit mehreren formschlüssigen Schaltelementen.

Aus der Praxis sind Stufenautomatgetriebe bekannt, welche unter anderem in Planetengetriebebauweise oder in Vorgelegebauweise ausgeführt sind. In Planetengetriebebauweise ausgeführte Stufenautomatgetriebe sind vorzugsweise mit einem hydrodynamischen Drehmomentwandler als Anfahrelement sowie hauptsächlich mit reibschlüssigen Schaltelementen ausgebildet, so dass mit diesem Getriebetyp Schaltungen ohne Zugkraftunterbrechung durchführbar sind. Damit die im Antriebsstrang von der Antriebsmaschine in Richtung des Abtriebs zu führenden Drehmomente von den reibschlüssigen Schaltelementen übertragen werden können, müssen diese verhältnismäßig groß dimensioniert werden, wodurch jedoch nachteilhafterweise in den Schaltelementen auftretende Schleppverluste im Schlupfbetrieb oder im geöffneten Zustand der Schaltelemente groß sind. Da die reibschlüssigen Schaltelemente zudem meist auch hydraulisch betätigt werden, ist ein aufwändiges hydraulisches System mit einer hydraulischen Fördereinrichtung erforderlich, welches aufgrund einer Aufnahmeleistung der Fördereinrichtung und durch Leckageverluste zu einer Verschlechterung des Wirkungsgrades des Getriebes beiträgt. Die Schleppverluste sind durch einen Ersatz der reibschlüssigen Schaltelemente durch formschlüssige Schaltelemente reduzierbar, wobei die Gangstufenwechsel dann nachteilhafterweise nicht ohne Zugkraftunterbrechung durchführbar sind.

Um auch mit in Vorgelegebauweise ausgeführten Stufenautomatgetrieben zugkraftunterbrechungsfreie Schaltungen durchführen zu können, werden diese beispielsweise als so genannte Doppelkupplungsgetriebe ausgeführt. Dieser Getriebetyp weist zwei reibschlüssige Schaltelemente auf, mittels welchen im Getriebe abwechselnd zwei Leistungsstränge in den Kraftfluss des Getriebes zugeschaltet oder aus dem Kraftfluss abgeschaltet werden. In den beiden Leistungssträngen sind über formschlüssige Schaltelemente Zahnradpaarungen mit verschiedenen Übersetzungen zu- bzw. abschaltbar, wobei die Übersetzungen der Leistungsstränge dann eingestellt bzw. verändert werden, wenn der betreffende Leistungsstrang gerade nicht in den Kraftfluss zugeschaltet ist und sich im lastfreien Zustand befindet. Im Bereich der verwendeten formschlüssigen Schaltelemente treten im Vergleich zu den reibschlüssigen Schaltelementen eines Planetengetriebes erheblich kleinere Schleppmomente auf, so dass hier weniger Verluste auftreten und ein Getriebegesamtwirkungsgrad in geringerem Umfang beeinträchtigt wird.

Die in Vorgelegebauweise ausgeführten Doppelkupplungsgetriebe sind im Vergleich zu Planetengetrieben jedoch nachteilhafterweise durch eine niedrigere Leistungsdichte gekennzeichnet, weshalb sie bei gleicher Gangstufenanzahl mehr Bauraum benötigen, der jedoch besonders bei Kraftfahrzeugen nur begrenzt zur Verfügung steht.

Des Weiteren liegt ein Verzahnungswirkungsgrad eines Vorgelegegetriebes in etwa auf dem niedrigen Niveau eines Handschaltgetriebes, was durch den an sich bekannten zweifachen Stimradeingriff bedingt ist. Im Gegensatz hierzu weisen Planetengetriebe einen gangabhängigen Verzahnungswirkungsgrad auf, der in Abhängigkeit des jeweilig verwendeten Radsatzschemas besonders in den Hauptfahrgängen höher ist als bei einem in Koaxialbauweise ausgeführten Vorgelegegetriebe.

Aus der DE 31 31 138 A1 ist ein gattungsgemäβes lastschaltbares Platenrad-Wechselgetriebe für Kraftfahrzeuge mit einer automatischen Getriebesteuerung und mit mehreren gekuppelten Planetenradsätzen sowie mit Schaltkupplungen und Schaltbremsen zur Bildung von Antriebssträngen mit unterschiedlichen Übersetzungen, in dem nur zwei Schaltkupplungen, die z. B. an der Antriebswelle angeordnet als Lastschaltkupplungen eingerichtet sind und das Antriebsmoment im Prinzip über zwei Antriebsstränge wahlweise übertragen, bekannt. Die übrigen Schaltkupplungen und -bremsen können immer dann geschaltet werden, wenn sie nicht an der Übertragung des Drehmoments beteiligt sind. Durch geeignete Auswahl und Anordnung der gekoppelten Planetensätze, Schaltkupplungen und -bremsen im Zusammenhang mit den zwei lastschaltbaren Kupplungen ergibt sich eine hohe Mehrfachnutzung der einzelnen Bauelemente sowie ein einfacher Aufbau bei geeigneten Übersetzungen und eine vergleichbare hohe Gangzahl.

Das aus der DE 31 31 138 A1 bekannte lastschaltbare Planetenrad-Wechselgetriebe weist jedoch den Nachteil auf, dass Planetenradsätze des Planetenradgetriebes über gestufte Doppelplanetenräder verbunden sind, die durch hohe Herstellkosten gekennzeichnet sind und zu dem im Betrieb eine Verkippung aufweisen, die eine Verringerung des Verzahnungswirkungsgrades der Planetenradsätze zur Folge hat.

Der vorliegenden Erfindung liegt daher die Aufgabe zugrunde, ein Planetengetriebe mit einem hohen Wirkungsgrad zur Verfügung zu stellen.

Erfindungsgemäß wird diese Aufgabe mit einem Planetengetriebe mit den Merkmalen des Patentanspruches 1 oder mit den Merkmalen des Patentanspruches 2 gelöst.

Das erfindungsgemäße Planetengetriebe mit mehreren Planetenradsätzen, mit wenigstens zwei reibschlüssigen Schaltelementen zum Zuschalten verschiedener Leistungspfade in einen Kraftfluss und mit mehreren formschlüssigen Schaltelementen zum Einstellen verschiedener Übersetzungsstufen in den Leistungspfaden, bei welchem die reibschlüssigen Schaltelemente und die formschlüssigen Schaltelemente derart zwischen Wellen der Planetenradsätze, einem Gehäuse sowie einer Getriebeeingangswelle und einer Getriebeausgangswelle angeordnet sind, dass Gangstufenwechsel zumindest in einem unteren Gangstufenbereich über die reibschlüssigen Schaltelemente zugkraftunterbrechungsfrei durchführbar sind, und bei dem wenigstens eines der reibschlüssigen Schaltelemente als Kupplung ausgeführt ist, ist einfach und kostengünstig herstellbar.

Dies wird dadurch erreicht, dass ein zweiter Planetenradsatz, ein dritter Planetenradsatz und ein vierter Planetenradsatz eine 3-Steg-5-Wellen-Getriebeeinrichtung ausbilden und die Planetenradsätze der 3-Steg-5-Wellen-Getriebeeinrichtung mit separaten Planetenrädern ausgeführt sind, welche im Vergleich zu gestuften Doppelplanetenrädern einfacher und kostengünstiger herstellbar sind. Des Weiteren ist mit separaten Planetenrädern ein hoher Verzahnungswirkungsgrad mit einem wesentlich niedrigeren konstruktiven Aufwand als bei gestuften Doppelplanetenrädern erzielbar.

Bei einer alternativen erfindungsgemäßen Ausführungsform eines Planetengetriebes werden diese vorgenannten Vorteile dadurch erzielt, dass ein zweiter Planetenradsatz, ein dritter Planetenradsatz und ein vierter Planetenradsatz eine reduzierte 3-Steg-5-Wellen-Getriebeeinrichtung ausbilden, bei welcher zwei der vorgenannten Planetenradsätze über Doppelplanetenräder ohne Stufung miteinander verbunden sind.

Darüber hinaus sind mit dem erfindungsgemäßen Planetengetriebe mit den Merkmalen des Patentanspruches 1 bzw. mit den Merkmalen des Patentanspruches 2 vorteilhafterweise Schaltungen bzw. Gangstufenwechsel zumindest in einem unteren Gangstufenbereich bzw. einem Hauptfahrbereich zugkraftunterbrechungsfrei mit Getriebewirkungsgraden in den einzelnen Gangstufen durchführbar, die im Wesentlichen oberhalb eines Wirkungsgrades eines Vorgelegegetriebes liegen.

Dies wird dadurch erreicht, dass das Planetengetriebe gemäß Patentanspruch 1 bzw. gemäß Patentanspruch 2 mit mehreren Planetenradsätzen ausgeführt ist, die durch einen guten Verzahnungswirkungsgrad gekennzeichnet sind, und zudem in dem Planetengetriebe verschiedene Übersetzungsstufen bzw. Gangstufen durch Verbinden einzelner Wellen der Planetenradsätze über formschlüssige Schaltelemente eingestellt werden, die im Vergleich zu reibschlüssigen Schaltelementen durch geringere Schleppmomente gekennzeichnet sind.

Darüber hinaus sind zwei reibschlüssige Schaltelemente vorgesehen, mittels welchen verschiedene über die formschlüssigen Schaltelemente in dem Planetengetriebe generierbare Leistungspfade in den Kraftfluss zuschaltbar oder aus dem Kraftfluss abschaltbar sind, so dass die in einem aktuell nicht im Kraftfluss befindlichen Leistungspfad angeordneten formschlüssigen Schaltelemente lastfrei schaltbar sind und ein Wechsel von einem zugeschalteten Leistungspfad, der sich zur Darstellung der aktuellen Gangstufe im Kraftfluss des Planetengetriebes befindet, zu einem abgeschalteten Leistungspfad, in dem zur Darstellung einer neuen höheren oder niedrigeren Gangstufe verschiedene Wellen der Plantetenradsätze über die formschlüssigen Schaltelemente miteinander verbunden sind oder vorzugsweise mit einem gehäusefesten Bauteil verbunden sind, im Sinne einer Überschneidungsschaltung zugkraftunterbrechungsfrei durchführbar ist.

Dazu sind die reibschlüssigen Schaltelemente und die formschlüssigen Schaltelemente bei dem Planetengetriebe gemäß Patentanspruch 1 bzw. gemäß Patentanspruch 2 derart angeordnet, dass verschiedene Übersetzungsstufen in dem Planetengetriebe jeweils in einem über ein reibschlüssiges Schaltelement lastfrei geschalteten Leistungspfad vor der Aufnahme in den Kraftfluss des jeweiligen Planetengetriebes einstellbar sind. Anschließend wird der Leistungspfad der neuen Gangstufe durch Schließen des geöffneten reibschlüssigen Schaltelementes in den Kraftfluss des Getriebes aufgenommen, während der sich aktuell im Kraftfluss befindliche Leistungspfad der abzuschaltenden Gangstufe durch Öffnen des geschlossenen reibschlüssigen Schaltelementes aus dem Kraftfluss geführt wird.

Daran anschließend ist der Leistungspfad der abgeschalteten Gangstufe lastfrei, wodurch nunmehr die Möglichkeit besteht, die Übersetzung des lastfreien Leistungspfades des jeweiligen Planetengetriebes durch geeignetes Schalten der formschlüssigen Schaltelemente zu verändern. Das bedeutet wiederum, dass ein zugkraftunterbrechungsfreies Schalten bzw. ein zugkraftunterbrechungsfreier Gangstufenwechsel in einem erfindungsgemäß ausgeführten Planetengetriebe durch wechselseitiges Zu- und Abschalten der beiden reibschlüssigen Schaltelemente in Verbindung mit einer Übersetzungsänderung unter lastfreien Bedingungen durchführbar ist.

Somit vereint ein erfindungsgemäßes Planetengetriebe die Vorteile eines herkömmlichen Planetengetriebes, d. h. eine hohe Leistungsdichte bei gleichzeitig günstigem Verzahnungswirkungsgrad, mit den Vorzügen eines in Vorgelegebauweise ausgeführten Doppelkupplungsgetriebes, bei welchem Schaltungen zugkraftunterbrechungsfrei mit niedrigen Schleppmomenten im Bereich der Schaltelemente durchführbar sind.

Vorteilhafte Weiterbildungen des Gegenstandes nach der Erfindung ergeben sich aus den Patentansprüchen und den unter Bezugnahme auf die Zeichnung prinzipmäßig beschriebenen Ausführungsbeispielen, wobei in der Beschreibung der verschiedenen Ausführungsbeispiele der Übersichtlichkeit halber für bau- und funktionsgleiche Bauteile dieselben Bezugszeichen verwendet werden.
Es zeigt:
- Fig. 1: ein Räderschema eines erfindungsgemäß ausgebildeten Planetengetriebes;
- Fig. 2a: ein Schaltschema der Schaltelemente des Räderschemas gemäß Fig. 1, welches als 6-Gang-Getriebe betrieben wird;
- Fig. 2b: ein Schaltschema der Schaltelemente des Räderschemas gemäß Fig. 1, welches als 7-Gang-Getriebe betrieben wird;
- Fig. 2c: ein Schaltschema der Schaftelemente des Räderschemas gemäß Fig. 1, welches als 8-Gang-Getriebe betrieben wird;
- Fig. 3: ein Räderschema eines weiteren Ausführungsbeispiels des Planetengetriebes nach der Erfindung;
- Fig. 4a: ein Schaltschema der Schaltelemente des Räderschemas gemäß Fig. 3, welches als 6-Gang-Getriebe betrieben wird;
- Fig. 4b: ein Schaltschema der Schaltelemente des Räderschemas gemäß Fig. 3, wobei das Planetengetriebe als 7-Gang-Getriebe betrieben wird;
- Fig. 4c: ein Schaltschema der Schaltelemente des Räderschemas gemäß Fig. 3, wobei das Planetengetriebe als 8-Gang-Getriebe betrieben wird;
- Fig. 5: eine vergrößerte Einzeldarstellung des in Fig. 1 und Fig. 3 näher gekennzeichneten Bereiches X;
- Fig. 5a: eine von in Fig. 1 und Fig. 3 abweichende Anordnung der beiden reibschlüssigen Schaltelemente;
- Fig. 5b: eine weitere Anordnungsmöglichkeit der beiden reibschlüssigen Schaltelemente der Planetengetriebe 1 gemäß Fig. 1 und Fig. 3, wobei eines der reibschlüssigen Schaltelemente als reibschlüssige Bremse ausgeführt ist; und
- Fig. 6: eine vergrößerte Einzeldarstellung des in Fig. 1 und Fig. 3 näher bezeichneten Bereiches Y.

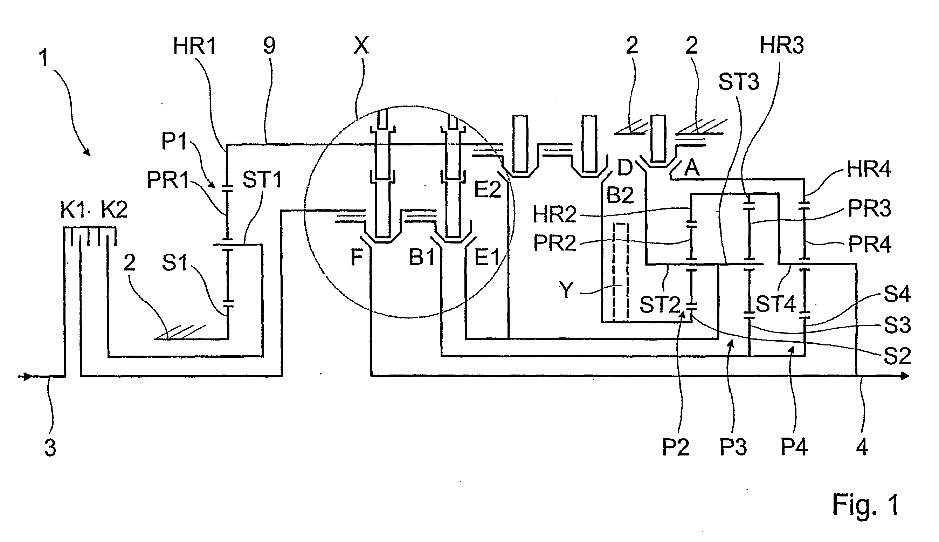

In Fig. 1 ist ein Räderschema eines Planetengetriebes 1 bzw. eines Doppelkupplungsgetriebes in Planetenbauweise mit vier Planetenradsätzen P1 bis P4, zwei reibschlüssigen Schaltelementen K1, K2 und mit mehreren formschlüssigen Schaltelementen A, B1, B2, D, E1, E2 und F dargestellt, die vorliegend als herkömmliche Synchronisierungen ausgeführt sind. Selbstverständlich können die Schaltelemente A bis F auch als nicht synchronisierte formschlüssige Schaltelemente ausgeführt sein.

Die reibschlüssigen Schaltelemente K1 und K2 sind zum Zuschalten verschiedener Leistungspfade in einen Kraftfluss des Planetengetriebes 1 vorgesehen. Die formschlüssige Schaltelemente A bis F sind zum Einstellen verschiedener Übersetzungsstufen in den Leistungspfaden des Planetengetriebes 1 vorgesehen. Des Weiteren sind die reibschlüssigen Schaltelemente K1 und K2 sowie die formschlüssigen Schaltelemente A bis F derart zwischen den Wellen der Planetenradsätze P1 bis P4, einem Gehäuse bzw. gehäusefesten Bauteilen 2 des Planetengetriebes 1 sowie einer Getriebeeingangswelle 3 und einer Getriebeausgangswelle 4 angeordnet, dass Gangstufenwechsel über die reibschlüssigen Schaltelemente K1 und K2 zugkraftunterbrechungsfrei durchführbar sind.

Der erste Planetenradsatz P1 ist vorliegend als ein einfacher Planetenradsatz ausgeführt, der einen Vorschaltradsatz ausbildet. Des Weiteren bilden der zweite Planetenradsatz P2, der dritte Planetenradsatz P3 und der vierte Planetenradsatz P4 zusammen einen Hauptradsatz, der als ein 3-Steg-5-Wellen-Getriebe ausgeführt ist. Dabei ist ein Hohlrad HR2 des zweiten Planetenradsatzes P2 mit einem Hohlrad HR3 des dritten Planetenradsatzes P3 verbunden. Zusätzlich ist ein Steg ST2 des zweiten Planetenradsatzes P2 mit dem Steg ST3 des dritten Planetenradsatzes P3 verbunden.

Das Hohlrad HR3 des dritten Planetenradsatzes P3 ist mit einem Steg ST4 des vierten Planetenradsatzes P4 verbunden, der wiederum mit der Getriebeausgangswelle 4 des Planetengetriebes 1 drehfest verbunden ist. Des Weiteren ist ein Sonnenrad S3 des dritten Planetenradsatzes P3 mit einem Sonnenrad S4 des vierten Planetenradsatzes verbunden.

Ein Sonnenrad S1 des ersten Planetenradsatzes P1 ist vorliegend mit dem gehäusefesten Bauteil 2 verbunden und somit nicht drehbar im Gehäuse des Planetengetriebes 1 angeordnet. Ein Steg ST1 des ersten Planetenradsatzes P1 ist über das zweite reibschlüssige Schaltelement K2 mit der Getriebeeingangswelle 3 verbindbar, während ein Hohlrad HR1 des ersten Planetenradsatzes P1 über das formschlüssige Schaltelement B2 mit dem Sonnenrad S2 des zweiten Planetenradsatzes P2 oder über das formschlüssige Schaltelement E2 mit dem Steg ST2 des zweiten Planetenradsatzes P2 verbindbar ist. Zwischen den Sonnenrädern S1 bis S4 und den Hohlrädern HR1 bis HR4 der vier Planetenradsätze P1 bis P4 wälzen jeweils Planetenräder PR1 bis PR4 in an sich bekannter Art und Weise ab.

Die reibschlüssigen Schaltelemente K1 und K2 sind vorliegend im Bereich des Getriebeeingangs des Planetengetriebes 1 angeordnet und als reibschlüssige Lamellenkupplungen ausgeführt, wobei es selbstverständlich im Ermessen des Fachmannes liegt, die reibschlüssigen Schaltelemente K1 und K2 als nass- oder trockenlaufende Kupplungen auszuführen.

Die formschlüssigen Schaltelemente A bis F sind in axialer Erstreckung des Planetengetriebes 1 zwischen dem ersten Planetenradsatz P1 und dem zweiten Planetenradsatz P2 angeordnet und vorzugsweise als an sich bekannte Synchronisierungen ausgeführt, so dass eventuell vorliegende Differenzdrehzahlen zwischen zwei über ein formschlüssiges Schaltelement zu verbindenden Bauteilen des Planetengetriebes 1 auf einfache Art und Weise ausgleichbar sind.

Das Hohlrad HR4 des vierten Planetenradsatzes P4 ist über das formschlüssige Schaltelement A mit dem gehäusefesten Bauteil 2 verbindbar und der Steg ST2 des zweiten Planetenradsatzes P2 ist über das formschlüssige Schaltelement D ebenfalls mit dem gehäusefesten Bauteil 2 verbindbar.

Das Sonnenrad S2 des zweiten Planetenradsatzes P2 ist über das formschlüssige Schaltelement B2 mit dem Hohlrad HR1 des ersten Planetenradsatzes P1 verbindbar, wobei das Sonnenrad S2 des zweiten Planetenradsatzes P2 zusätzlich mit dem Steg ST3 des dritten Planetenradsatzes P3 verbindbar ist, wenn zusätzlich zum formschlüssigen Schaltelement B2 auch das formschlüssige Schaltelement E2 geschlossen ist.

Das Sonnenrad S3 des dritten Planetenradsatzes P3 ist mit der Getriebeeingangswelle 3 verbunden, wenn sowohl das formschlüssige Schaltelement B1 als auch das erste reibschlüssige Schaltelement K1 geschlossen ist. Sind das erste reibschlüssige Schaltelement K1 und das formschlüssige Schaltelement F geschlossen, ist die Getriebeeingangswelle 3 mit der Getriebeausgangswelle 4 verbunden.

Der Steg ST1 des ersten Planetenradsatzes P1 steht mit dem Sonnenrad S3 des dritten Planetenradsatzes P3 in Wirkverbindung, wenn die formschlüssigen Schaltelemente B1 und E2 und die beiden reibschlüssigen Schaltelemente K1 und K2 geschlossen sind.

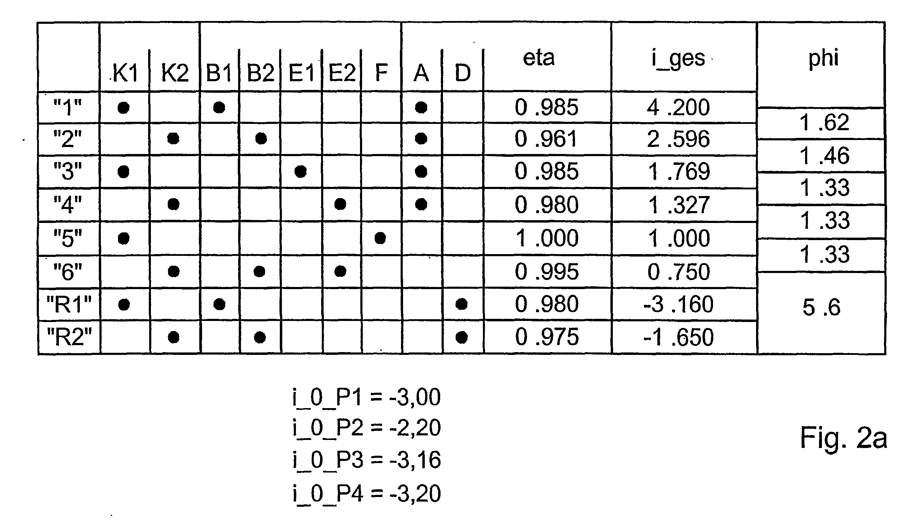

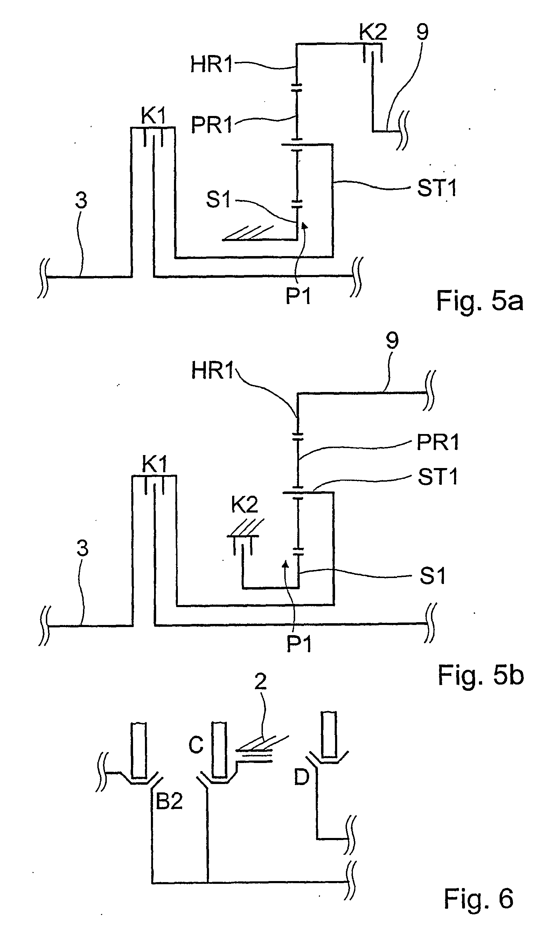

Zwischen dem Sonnenrad S2 des zweiten Planetenradsatzes P2 und dem formschlüssigen Schaltelement B2 ist in Fig. 1 ein strichliert ausgeführter Bereich Y dargestellt, welcher ein in Fig. 6 näher dargestelltes weiteres formschlüssiges Schaltelement C des Planetengetriebes repräsentiert, das optional in das Planetengetriebe 1 integriert sein kann. Das zusätzliche formschlüssige Schaltelement C ist zur Darstellung einer achten Vorwärtsgangstufe vorgesehen, wobei ohne das Schaltelement C mit dem in Fig. 1 dargestellten Planetengetriebe 1 sechs oder sieben Vorwärtsgangstufen und zwei Rückwärtsgangstufen darstellbar sind. Die in Fig. 2a bis Fig. 2c näher gezeigten Schaltschemata geben jeweils den Zusammenhang zwischen den einzelnen Übersetzungsstufen des Planetengetriebes 1 und den Schaltelementen A bis F wieder.

Die Schaltschemata der Fig. 2a bis Fig. 2c sind in Form einer Tabelle wiedergegeben, in deren Kopfspalte die einzelnen Gangstufen "1 ", "2", "3", "4,", "5", "6", "7", "8", "R1" und "R2" aufgeführt sind. Des Weiteren sind in der Kopfzeile der Schaltschemata die einzelnen Schaltelemente K1, K2, B1, B2, E1, E2, F, A, D und C, ein Verzahnungswirkungsgrad eta des Planetengetriebes 1, eine Gesamtübersetzung i_ges des Planetengetriebes 1 bei der jeweilig eingestellten Gangstufe sowie ein Stufensprung phi, der jeweils aus einem Quotient aus den Werten zweier aufeinander folgender Gesamtübersetzungen i_ges gebildet ist, aufgeführt.

Diejenigen Schaltelemente des Planetengetriebes 1, welche zur Einstellung einer Gangstufe geschlossen sind, sind in den Schaltschemata durch einen schwarzen Punkt gekennzeichnet, wobei die Zellen der Schaltschemata, welche keinen Punkt aufweisen, die Schaltelemente kennzeichnen, die jeweils geöffnet sind.

Aus dem Schaltschema gemäß Fig. 2a geht in Verbindung mit dem in Fig. 1 dargestellten Räderschema des Planetengetriebes 1 beispielsweise hervor, dass zur Einstellung der ersten Gangstufe "1" bzw. der ersten Gesamtübersetzung i_ges des Planetengetriebes 1 die Schaltelemente K1, B1 und A geschlossen bzw. zugeschaltet sind. In diesem Betriebszustand des Planetengetriebes 1 wird ein über die Getriebeeingangswelle 3 in das Planetengetriebe 1 eingeleitetes Antriebsmoment einer Antriebsmaschine eines Fahrzeuges über das Sonnenrad S4, die Planetenräder PR4 und das Hohlrad HR4 des vierten Planetenradsatzes P3 auf den Steg ST4 des vierten Planetenradsatzes P4 und von dort auf die Getriebeausgangswelle 4 weiter geleitet. In diesem Schaltzustand des Planetengetriebes 1 wird das Antriebsmoment der Getriebeeingangswelle 3 über einen über das erste reibschlüssige Schaltelement K1 zugeschalteten Leistungszweig des Planetengetriebes durch das Planetengetriebe 1 in Richtung des Abtriebs des Fahrzeugs geführt. Die in der ersten Gangstufe "1" eingestellte Gesamtübersetzung i_ges des Planetengetriebes 1 weist den Wert 4,2 auf und das Planetengetriebe 1 wird mit einem Verzahnungswirkungsgrad eta von 0,985 betrieben.

Zur Darstellung der zweiten Gangstufe "2" sind die beiden formschlüssigen Schaltelemente B2 und A sowie das zweite reibschlüssige Schaltelement K2 geschlossen, wobei ein Verzahnungswirkungsgrad eta des Planetengetriebes den Wert 0,961 annimmt und die Gesamtübersetzung i_ges 2,596 beträgt. Damit ergibt sich zwischen der ersten Gangstufe 1 und der zweiten Gangstufe 2 des Planetengetriebes 1 ein Stufensprung phi von 1,62.

Die Hochschaltung ausgehend von der ersten Gangstufe "1" in die zweite Gangstufe "2" des Planetengetriebes 1 ist mit dem in Fig. 1 dargestellten Planetengetriebe 1 ohne Zugkraftunterbrechung durchführbar, da bei einer entsprechenden Schaltanforderung zunächst das lastfreie formschlüssige Schaltelement B2 bei geöffnetem zweiten reibschlüssigen Schaltelement K2 geschlossen wird. Anschließend wird das zweite reibschlüssige Schaltelement K2 vorzugsweise entsprechend einer an sich bekannten Überschneidungsschaltung über eine Schlupfphase geschlossen, während gleichzeitig das erste reibschlüssige Schaltelement K1 in entsprechender Art und Weise geöffnet wird. Dabei werden die Übertragungsfähigkeiten der beiden reibschlüssigen Schaltelementen K1 und K2 derart von einem nicht näher dargestellten Steuergerät des Planetengetriebes 1 eingestellt, dass der Gangstufenwechsei zugkraftunterbrechungsfrei und mit hohem Fahrkomfort durchgeführt wird.

Nach Beendigung des Gangstufenwechsels bzw. der Hochschaltung wird das Antriebsmoment der Getriebeeingangswelle 3 über den nunmehr über das zweite reibschlüssige Schaltelement K2 in den Kraftfluss des Planetengetriebes 1 zugeschalteten Leistungspfad des Planetengetriebes 1 in Richtung der Getriebeausgangswelle 4 geführt. Das aufgrund des geöffneten ersten reibschlüssigen Schaltelementes K1 lastfrei geschaltete formschlüssige Schaltelement B1 ist auf einfache Art und Weise öffenbar, so dass über das formschlüssige Schaltelement B1 kein Drehmoment mehr übertragbar ist.

Liegt eine weitere Schaltanforderung für eine Hochschaltung von der zweiten Gangstufe "2" in die dritte Gangstufe "3" des Planetengetriebes 1 vor, wird das bei geöffnetem ersten reibschlüssigen Schaltelement K1 sich in lastfreiem Zustand befindliche formschlüssige Schaltelement E1 geschlossen. Anschließend wird in der vorbeschriebenen Art und Weise die Übertragungsfähigkeit des ersten reibschlüssigen Schaltelementes K1 angehoben und die Übertragungsfähigkeit des zweiten reibschlüssigen Schaltelementes K2 reduziert, so dass der von dem zweiten reibschlüssigen Schaltelement K2 zugeschaltete Leistungspfad des Planetengetriebes 1 abgeschaltet wird und der nunmehr über das formschlüssige Schaltelement E1 und das formschlüssige Schaltelement A generierte neue Leistungspfad durch das erste reibschlüssige Schaltelement K1 in den Kraftfluss des Planetengetriebes 1 aufgenommen wird. Anschließend ist das bei geöffnetem zweiten reibschlüssigen Schaltelement K2 lastfrei geschaltete formschlüssige Schaltelement B2 auf einfache Art und Weise öffenbar.

Die weiteren Gangstufen "4", "5" und "6" des Planetengetriebes 1 sind in derselben Art und Weise durch wechselseitiges Zu- und Abschalten der beiden reibschlüssigen Schaltelemente K1 und K2 zugkraftunterbrechungsfrei einstellbar, wobei die zur Darstellung der Gangstufen "4", "5" und "6" benötigten formschlüssigen Schaltelemente vor dem Zuschalten des jeweiligen Leistungspfades geschlossen werden und nach dem Abschalten der abzuschaltenden Gangstufe in lastfreiem Zustand geöffnet werden. Darüber hinaus sind auch alle Rückschaltungen zwischen den Gangstufen "1" bis "6" mit der vorbeschriebenen Vorgehensweise zugkraftunterbrechungsfrei durchführbar.

Die in den Fig. 2a bis Fig. 2c aufgeführten Gesamtübersetzungen i_ges werden mit den Planetenradsätzen P1 bis P4 erreicht, die definierte Standübersetzungen aufweisen. Dabei weist der ersten Planetenradsatz P1 eine Standübersetzung i_0_P1 von -3,00 auf. Der zweite Planetenradsatz P2 ist mit einer Standübersetzung i_0_P2 von -2,20 ausgeführt, während die Standübersetzungen i_0_P3 und i_0_P4 des dritten bzw. des vierten Planetenradsatzes P3 bzw. P4 -3,16 bzw. -3,2 betragen.

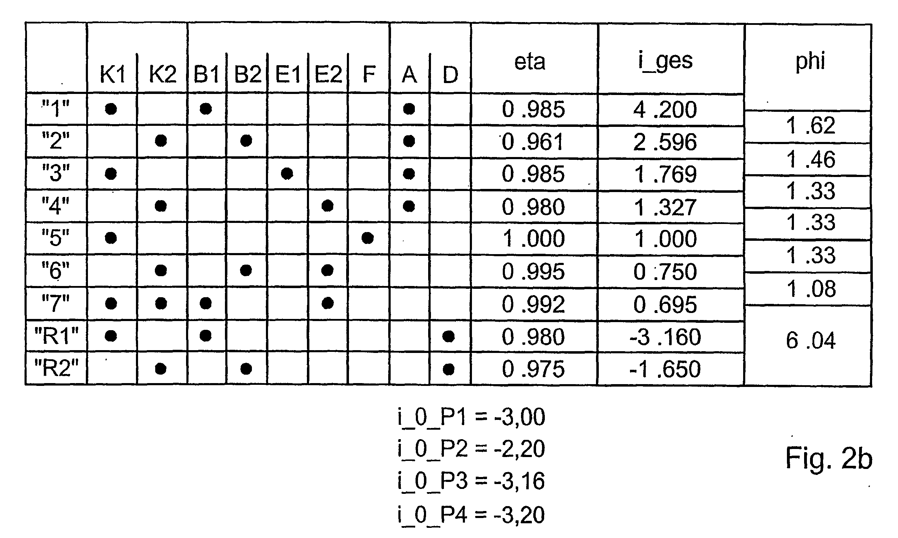

Das in Fig. 2b dargestellte Schaltschema weist im Vergleich zu dem in Fig. 2a dargestellten Schaltschema eine weitere siebte Vorwärtsgangstufe "7" auf. Zur Darstellung der siebten Gangstufe "7" werden die beiden reibschlüssigen Schaltelemente K1 und K2 sowie die formschlüssigen Schaltelemente B1 und E2 geschlossen. Das bedeutet, dass sowohl die Hochschaltung ausgehend von der sechsten Gangstufe "6" in die siebte Gangstufe "7" sowie die Rückschaltung aus der siebten Gangstufe "7" in die sechste Gangstufe "6" nur mit einer Zugkraftunterbrechung durchführbar sind, um jeweils zwischen den beiden formschlüssigen Schaltelementen B1 und B2 umschalten zu können. Die Schaltungen zwischen den Gangstufen "1" bis "6", welche einen unteren Gangbereich eines Hauptfahrbereichs bilden, sind nach wie vor zugkraftunterbrechungsfrei durchführbar.

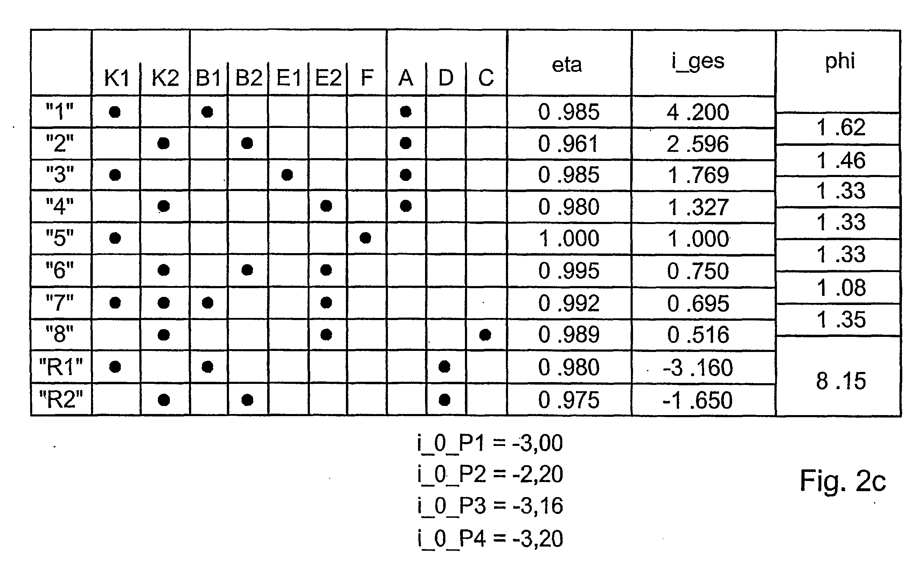

Das Schaltschema gemäß Fig. 2c weist im Vergleich zum Schaltschema gemäß Fig. 2b eine weitere Vorwärtsgangstufe "8" auf, die mit dem vorgenannten formschlüssigen Schaltelement C realisiert wird.

In Abhängigkeit der jeweils ausgewählten Ausführungsform des Planetengetriebes 1 bzw. der ausgewählten Betriebsweise des Planetengetriebes 1 weist dieses als 6-Gang-Getriebe eine Gesamtspreizung von 5,6, als 7-Gang-Getriebe eine Gesamtspreizung von 6,04 und als 8-Gang-Getriebe eine Gesamtspreizung von 8,15 auf.

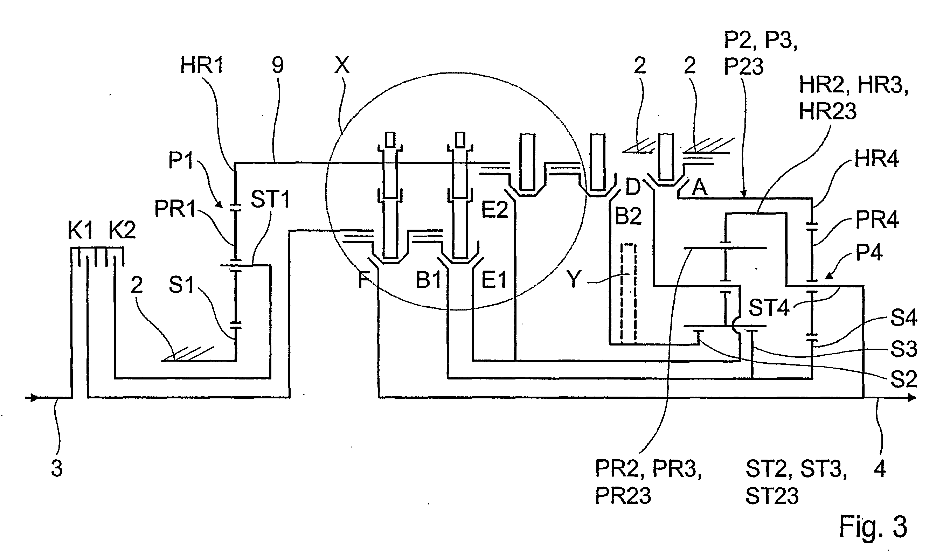

In Fig. 3 ist ein weiteres Räderschema des Planetengetriebes 1 dargestellt, das sich von dem in Fig. 1 dargestellten Räderschema des Planetengetriebes 1 lediglich im Bereich des Hauptradsatzes unterscheidet. Der von dem zweiten Planetenradsatz P2, dem dritten Planetenradsatz P3 und dem vierten Planetenradsatz P4 gebildete Hauptradsatz gemäß Fig. 3 ist als ein zusammengesetztes und reduziertes 3-Steg-5-Wellen-Getriebe ausgeführt, bei dem die Hohlräder, die Planetenräder und die Stege des zweiten und des dritten Planetenradsatzes P2 und P3 verbunden sind, so dass der zweite und der dritte Planetenradsatz P2 und P3 einen Planetenradsatz P23 ausbilden. Die Planetenräder PR2 und PR3 der Planetenradsätze P2 und P3 sind vorliegend als lange und nicht gestufte Planetenräder PR23 ausgeführt, so dass der Bauaufwand im Vergleich zu zwei getrennt ausgeführten Stegeinheiten nur um ein weiteres Sonnenrad erhöht ist. Des Weiteren bilden die Hohlräder HR2 und HR3 sowie die Stege ST2 und ST3 des zweiten und dritten Planetenradsatzes P2 und P3 jeweils eine integrale Einheit, die in Fig. 3 unter den Bezugszeichen HR23 und ST23 näher dargestellt sind.

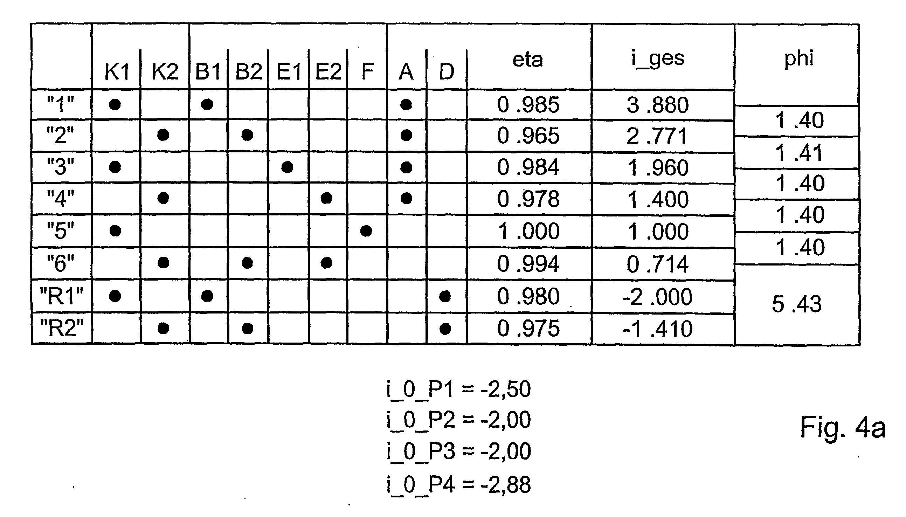

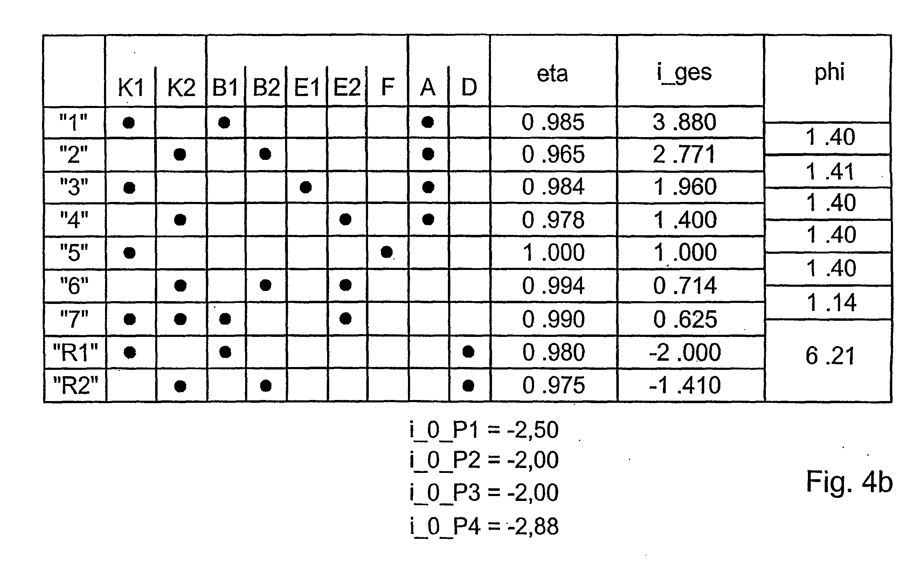

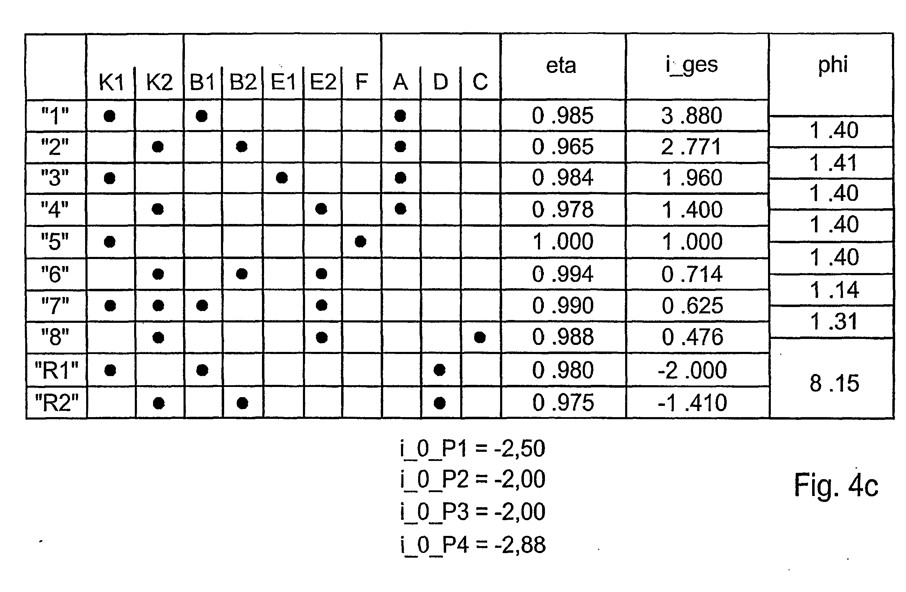

In Fig. 4a bis Fig. 4c sind drei mit dem in Fig. 3 als Räderschema dargestellten Planetengetriebe 1 korrespondierende Schaltschemata dargestellt, deren Aufbau den Schaltschemata gemäß Fig. 2a bis Fig. 2c entspricht, wobei die Standübersetzungen i_0_P1 bis i_0_P4 der Planetenradsätze P1 bis P4 -2,50, -2,00, -2,00 bzw. -2,88 betragen.

Die Gangsprünge phi zwischen den ersten sechs Vorwärtsgangstufen "1" bis "6" des Planetengetriebes gemäß Fig. 3 stellen eine geometrische Reihe dar und die Gesamtübersetzungen i_ges der Vorwärtsgangstufen "1" bis "6", "1" bis "7" oder "1" bis "8" des Planetengetriebes gemäß Fig. 3 sind kleiner als die Gesamtübersetzungen i_ges des Planetengetriebes gemäß Fig. 1, wobei die Schaltungen zwischen den Gangstufen "1" bis "6" des Planetengetriebes 1 gemäß Fig. 3 in derselben Art und Weise zugkraftunterbrechungsfrei durchführbar sind, wie bei dem Planetengetriebe 1 gemäß Fig. 1.

Sowohl die Ausführung des Planetengetriebes 1 gemäß Fig. 1 als auch das Ausführungsbeispiel gemäß Fig. 3 kann ohne das formschlüssige Schaltelement F ausgebildet werden, wobei Schaltungen zwischen der vierten Gangstufe "4" und der fünften Gangstufe "5" jeweils nur mit Zugkraftunterbrechung durchgeführt werden können.

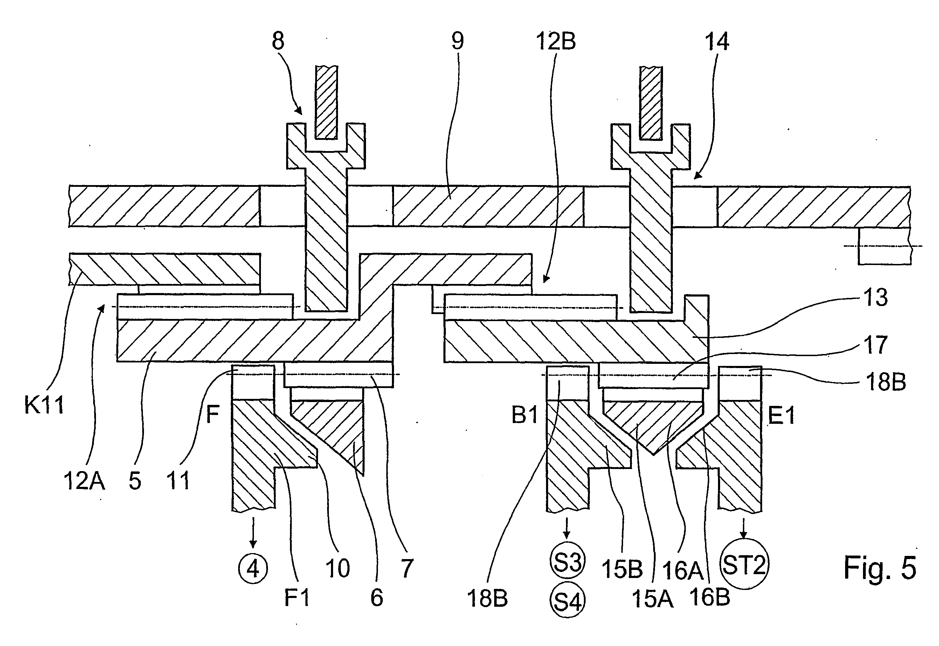

In Fig. 5 ist ein in Fig. 1 und Fig. 3 näher bezeichneter Bereich X in Alleinstellung dargestellt, wobei die als Synchronisierungen ausgeführten formschlüssigen Schaltelemente F, B1 und E1 näher gezeigt sind. Die Schaltelemente F, B1 und E1 weisen grundsätzlich einen Aufbau herkömmlicher Synchronisierungen auf. So ist eine mit der Getriebeausgangswelle 4 in Verbindung stehende Kupplungshälfte F1 des Schaltelementes F über einen in axialer Richtung verschiebbaren Synchronring 5, der mit einem Gegenkonus 6 und einer Sperrverzahnung 7 ausgeführt ist, mit einer Kupplungshälfte K11 des ersten reibschlüssigen Schaltelementes K1 verbindbar.

Dazu wird der Synchronring 5 über eine Schaltmuffe 8, welche durch eine zwischen dem Hohlrad HR1 des ersten Planetenradsatzes P1 und dem Hauptradsatz des Planetengetriebes 1 verlaufende Verbindungswelle 9 geführt ist, zunächst gegen einen Gegenkonus 10 des Schaltelementes F gedrückt, womit eine Differenzdrehzahl zwischen dem Synchronring 5 und der Kupplungshälfte F1 des Schaltelementes F reibschlüssig ausgeglichen wird. Mit zunehmendem Verstellweg des Synchronringes 5 in Richtung der Kupplungshälfte F1 des Schaltelementes F wird die Differenzdrehzahl egalisiert und die Sperrverzahnung 7 des Synchronringes 5 mit einer weiteren Sperrverzahnung 11 der Kupplungshälfte F1 des Schaltelementes F in Eingriff gebracht, so dass zwischen dem Synchronring 5 und der Kupplungshälfte F1 des Schaltelementes F eine drehfeste Verbindung vorliegt.

Der Synchronring 5 ist jeweils über eine Verzahnung 12A, 12B mit der Kupplungshälfte K11 des ersten reibschlüssigen Schaltelementes K1 und einem weiteren Synchronring 13, der den beiden formschlüssigen Schaltelementen B1 und E1 zugeordnet ist, drehfest verbunden. Der weitere Synchronring 13 ist über eine weitere Schaltmuffe 14 in axialer Richtung zwischen den beiden formschlüssigen Schaltelementen B1 und E1 derart verschiebbar angeordnet, dass die Kupplungshälfte K11 des ersten reibschlüssigen Schaltelementes K1 entweder mit den Sonnenrädern S3 und S4 des dritten bzw. des vierten Planetenradsatzes P3 bzw. P4 oder mit dem Steg ST2 bzw. ST3 des zweiten bzw. des dritten Planetenradsatzes P2 bzw. P3 verbindbar ist.

Dabei sind die Verbindungen zwischen dem weiteren Synchronring 13 und den Schaltelementen B1 und E1 in der gleichen Art und Weise über Gegenkonusflächen 15A und 15B sowie 16A und 16B und Sperrverzahnungen 17 und 18A und 18B herstellbar. Die Schaltmuffen 8 und 14, die von außen nach innen durch die Verbindungswelle 9 in die Synchronringe 5 und 13 eingreifen, sind in lastfreiem Zustand der beiden Synchronringe 5 und 13 zum Zu- bzw. Abschalten der formschlüssigen Schaltelemente F, B1 und E1 in axialer Erstreckung des Planetengetriebes verschiebbar.

In Fig. 5a ist eine weitere Möglichkeit der Anordnung der beiden reibschlüssigen Schaltelemente K1 und K2 dargestellt, wobei das zweite reibschlüssige Schaltelement K2 zwischen dem Hohlrad HR1 des ersten Planetenradsatzes P1 und der Verbindungswelle 9 angeordnet ist. In der in Fig. 5a dargestellten Position ist mit dem zweiten reibschlüssigen Schaltelement K2 die gleiche vorbeschriebene Funktionalität des Planetengetriebes darstellbar wie mit dem in Fig. 1 und Fig. 3 dargestellten Planetengetriebe.

In Fig. 5b ist das zweite reibschlüssige Schaltelement K2 als Bremse ausgeführt, mittels welcher das Sonnenrad S1 des ersten Planetenradsatzes mit einem gehäusefesten Bauteil 2 des Planetengetriebes 1 in Wirkverbindung bringbar ist, wobei bei dieser Ausführungsform des Planetengetriebes 1 ebenfalls durch eine wechselseitige Ansteuerung der beiden reibschlüssigen Schaltelemente K1 und K2 die Schaltungen zwischen den Gangstufen "1" bis "6" zugkraftunterbrechungsfrei durchführbar sind.

Bezug nehmend auf Fig. 6 ist der in Fig. 1 und Fig. 3 lediglich stark schematisiert dargestellte Bereich Y, in welchem das optionale formschlüssige Schaltelement C angeordnet ist, in Alleinstellung gezeigt. Über das formschlüssige Schaltelement C ist das Sonnenrad S2 des zweiten Planetenradsatzes P2 gegen das gehäusefeste Bauteil 2 bzw. gegen das Gehäuse des Planetengetriebes 1 abbremsbar bzw. mit diesem drehfest verbindbar, wobei bei geschlossenem Schaltelement C in dem Planetengetriebe 1 gemäß Fig. 1 und auch in dem Planetengetriebe 1 gemäß Fig. 3 jeweils die achte Vorwärtsgangstufe "8" bei gleichzeitig geschlossenen Schaltelementen E2 und K2 darstellbar ist.

Bei allen in der Zeichnung dargestellten und in der Beschreibung näher erläuterten Ausführungsbeispielen des erfindungsgemäßen Planetengetriebes besteht durch eine geeignete Ansteuerung, vorzugsweise eine mechanische Ansteuerung, der formschlüssigen Schaltelemente die Möglichkeit, im Planetengetriebe eine derartige Überbestimmung zu erzeugen, dass die Getriebeabtriebswelle 4 arretiert ist und ein Abtrieb eines Fahrzeuges im Bereich des Planetengetriebes 1 drehfest gehalten wird. Dies wird beispielsweise dadurch erreicht, dass der Hauptradsatz durch gleichzeitiges Schließen mehrerer formschlüssiger Schaltelemente verblockt ist und sich im Gehäuse des Getriebes oder gegen das gehäusefeste Bauteil des Planetengetriebes abstützen kann. Mit dieser Vorgehensweise kann vorteilhafterweise auf eine herkömmliche Parksperreneinrichtung, wie sie in mit Automatgetrieben ausgeführten Fahrzeugen vorgesehen ist, verzichtet werden.

### Bezugszeichen

- 1: Planetengetriebe
- 2: Gehäusefestes Bauteil, Gehäuse
- 3: Getriebeeingangswelle
- 4: Getriebeausgangswelle
- 5: Synchronring des Schaltelementes F
- 6: Gegenkonus
- 7: Sperrverzahnung des Synchronringes
- 8: Schaltmuffe
- 9: Verbindungswelle
- 10: Gegenkonus des Schaltelementes F
- 11: Sperrverzahnung des Schaltelementes F
- 12A,B: Verzahnung
- 13: weiterer Synchronring
- 14: weitere Schaltmuffe
- 15A,B: Gegenkonusflächen
- 16A,B: Gegenkonusflächen
- 17: Sperrverzahnung
- 18A, B: Sperrverzahnungen

- A, B1, B2, C, D, E1, E2, F: formschlüssiges Schaltelement
- eta: Verzahnungswirkungsgrad
- F1: Kupplungshälfte des Schaltelementes F
- HR1, HR2, HR3, HR4, HR23: Hohlrad
- i_ges: Gesamtübersetzung
- K11: Kupplungshälfte des ersten reibschlüssigen Schalt-elementes
- phi: Gangsprung
- K1, K2: reibschlüssiges Schaltelement
- P1, P2, P3, P4, P23: Planetenradsatz
- PR1, PR2, PR3, PR4, PR23: Planetenrad
- "R", "R1 ", "R2": Rückwärtsgang
- S1, S2, S3, S4: Sonnenrad
- ST1, ST2, ST3, ST4: Steg
- "1" bis "8": Gangstufe

## Patentansprüche

1. Planetengetriebe (1), insbesondere Doppelkupplungsgetriebe in Planetenbauweise, mit mehreren Planetenradsätzen (P1, P2, P3, P4), mit wenigstens zwei reibschlüssigen Schaltelementen (K1, K2) zum Zuschalten verschiedener Leistungspfade in einen Kraftfluss und mit mehreren formschlüssigen Schaltelementen (A bis F) zum Einstellen verschiedener Übersetzungsstufen in den Leistungspfaden, wobei die reibschlüssigen Schaltelemente (K1, K2) und die formschlüssigen Schaltelemente (A bis F) derart zwischen Wellen (S1 bis S4, ST1 bis ST4, HR1 bis HR4) der Planetenradsätze (P1 bis P4), einem Gehäuse (2) sowie einer Getriebeeingangswelle (3) und einer Getriebeausgangswelle (4) angeordnet sind, dass Gangstufenwechsel zumindest in einem unteren Gangstufenbereich ("1" bis "6") über die reibschlüssigen Schaltelemente (K1, K2) zugkraftunterbrechungsfrei durchführbar sind, und wobei wenigstens eines der reibschlüssigen Schaltelemente (K1, K2) als Kupplung ausgeführt ist, **dadurch gekennzeichnet, dass** der zweite Planetenradsatz (P2), ein dritter Planetenradsatz (P3) und ein vierter Planetenradsatz (P4) eine 3-Steg-5-Wellen-Getriebeeinrichtung ausbilden, die mit separaten Planetenrädern (PR2 bis PR4) ausgeführt sind.

2. Planetengetriebe (1), insbesondere Doppelkupplungsgetriebe in Planetenbauweise, mit mehreren Planetenradsätzen (P1, P2, P3, P4), mit wenigstens zwei reibschlüssigen Schaltelementen (K1, K2) zum Zuschalten verschiedener Leistungspfade in einen Kraftfluss und mit mehreren formschlüssigen Schaltelementen (A bis F) zum Einstellen verschiedener Übersetzungsstufen in den Leistungspfaden, wobei die reibschlüssigen Schaltelemente (K1, K2) und die formschlüssigen Schaltelemente (A bis F) derart zwischen Wellen (S1 bis S4, ST1 bis ST4, HR1 bis HR4) der Planetenradsätze (P1 bis P4), einem Gehäuse (2) sowie einer Getriebeeingangswelle (3) und einer Getriebeausgangswelle (4) angeordnet sind, dass Gangstufenwechsel zumindest in einem unteren Gangstufenbereich ("1" bis "6") über die reibschlüssigen Schaltelemente (K1, K2) zugkraftunterbrechungsfrei durchführbar sind, und wobei wenigstens eines der reibschlüssigen Schaltelemente (K1, K2) als Kupplung ausgeführt ist, **dadurch gekennzeichnet, dass** ein zweiter Planetenradsatz (P2), ein dritter Planetenradsatz (P3) und ein vierter Planetenradsatz (P4) eine reduzierte 3-Steg-5-Wellen-Getriebeeinrichtung ausbilden, bei welcher zwei Planetenradsätze (P2, P3) über Doppelplanetenräder (P23) ohne Stufung miteinander verbunden sind.

3. Planetengetriebe nach Anspruch 1 oder 2, **dadurch gekennzeichnet, dass** wenigstens eines der reibschlüssigen Schaltelemente (K2) als Bremse ausgebildet ist.

4. Planetengetriebe nach einem der Ansprüche 1 bis 3, **dadurch gekennzeichnet, dass** die reibschlüssigen Schaltelemente (K1, K2) nass- oder trockenlaufend ausgeführt sind.

5. Planetengetriebe nach einem der Ansprüche 1 bis 4, **dadurch gekennzeichnet, dass** die formschlüssigen Schaltelemente (A bis F) als synchronisierte Schaltelemente ausgeführt sind.

6. Planetengetriebe nach einem der Ansprüche 1 bis 5, **dadurch gekennzeichnet, dass** die reibschlüssigen Schaltelemente (K1, K2) im Bereich des Getriebeeingangs und die formschlüssigen Schaltelemente (B1, B2, C, D, E1, E2, F) zwischen den reibschlüssigen Schaltelementen (K1, K2) und der Getriebeausgangswelle (4) angeordnet sind.

7. Planetengetriebe nach einem der Ansprüche 1 bis 6, **dadurch gekennzeichnet, dass** ein erster Planetenradsatz (P1) als einfacher Planetenradsatz ausgebildet ist.

8. Planetengetriebe nach Anspruch 7, **dadurch gekennzeichnet, dass** eine der Wellen (ST1) des ersten Planetenradsatzes (P1) über das zweite reibschlüssige Schaltelement (K2) mit der Getriebeeingangswelle (3) verbindbar ist.

9. Planetengetriebe nach Anspruch 7 oder 8, **dadurch gekennzeichnet, dass** eine der Wellen (ST1) des ersten Planetenradsatzes (P1) mit der Getriebeeingangswelle (3) verbunden ist und eine weitere Welle (S1) des ersten Planetenradsatzes (P1) über das zweite reibschlüssige Schaltelement (K2) gegen ein gehäusefestes Bauteil (2) abbremsbar ist.

10. Planetengetriebe nach einem der Ansprüche 8 oder 9, **dadurch gekennzeichnet, dass** eine der Wellen (ST1) des ersten Planetenradsatzes (P1) mit der Getriebeeingangswelle (3) verbunden ist und eine weitere Welle (HR1) des ersten Planetenradsatzes (P1) über das zweite reibschlüssige Schaltelement (K2) mit einer Welle (S2) eines zweiten Planetenradsatzes (P2) in Wirkverbindung bringbar ist.

11. Planetengetriebe nach einem der Ansprüche 1 bis 10, **dadurch gekennzeichnet, dass** der Steg (ST2) eines zweiten Planetenradsatzes (P2) mit dem Steg (ST3) eines dritten Planetenradsatzes (P3) und das Hohlrad (HR2) des zweiten Planetenradsatzes (P2) mit dem Hohlrad (HR3) des dritten Planetenradsatzes (P3) verbunden ist.

12. Planetengetriebe nach Anspruch 11, **dadurch gekennzeichnet, dass** das Hohlrad (HR3) des dritten Planetenradsatzes (P3) mit dem Steg (ST4) des vierten Planetenradsatzes (P4) verbunden ist.

13. Planetengetriebe nach einem der Ansprüche 11 oder 12, **dadurch gekennzeichnet, dass** das Sonnenrad (S3) des dritten Planetenradsatzes (P3) und das Sonnenrad (S4) des vierten Planetenradsatzes (P4) miteinander verbunden sind.

14. Planetengetriebe nach einem der Ansprüche 11 bis 13, **dadurch gekennzeichnet, dass** das Hohlrad (HR4) des vierten Planetenradsatzes (P4) über ein formschlüssiges Schaltelement (A) mit einem gehäusefesten Bauteil (2) verbindbar ist.

15. Planetengetriebe nach einem der Ansprüche 11 bis 14, **dadurch gekennzeichnet, dass** der Steg (ST4) des vierten Planetenradsatzes (P4) mit der Getriebeausgangswelle (4) verbunden ist.

16. Planetengetriebe nach einem der Ansprüche 11 bis 15, **dadurch gekennzeichnet, dass** der Steg (ST2) des zweiten Planetenradsatzes (P2) über ein formschlüssiges Schaltelement (D) mit einem gehäusefesten Bauteil verbindbar ist.

17. Planetengetriebe nach einem der Ansprüche 11 bis 16, **dadurch**
**gekennzeichnet, dass** das Sonnenrad (S2) des zweiten Planetenradsatzes (P2) über ein formschlüssiges Schaltelement (B2) mit dem Hohlrad (HR1) des ersten Planetenradsatzes (P1) verbindbar ist.

18. Planetengetriebe nach einem der Ansprüche 11 bis 17, **dadurch gekennzeichnet, dass** das Sonnenrad (S2) des zweiten Planetenradsatzes (P2) über zwei formschlüssige Schaltelemente (B2, E2) mit dem Hohlrad (HR1) des ersten Planetenradsatzes (P1) und dem Steg (ST3) des dritten Planetenradsatzes (P3) verbindbar ist.

19. Planetengetriebe nach einem der Ansprüche 11 bis 18, **dadurch gekennzeichnet, dass** das Sonnenrad (S3) des dritten Planetenradsatzes (P3) über ein formschlüssiges Schaltelement (B1) und das erste reibschlüssige Schaltelement (K1) mit der Getriebeeingangswelle (3) verbindbar ist.

20. Planetengetriebe nach einem der Ansprüche 11 bis 19, **dadurch gekennzeichnet, dass** die Getriebeeingangswelle (1) über das erste reibschlüssige Schaltelement (K1) und ein formschlüssiges Schaltelement (F) mit der Getriebeausgangswelle (4) verbindbar ist.

21. Planetengetriebe nach einem der Ansprüche 11 bis 20, **dadurch gekennzeichnet, dass** das Sonnenrad (S3) des dritten Planetenradsatzes (P3) über zwei formschlüssige Schaltelemente (B1 und E2) und die beiden reibschlüssigen Schaltelemente (K1, K2) mit dem Steg (ST1) des ersten Planetenradsatzes (P1) in Wirkverbindung bringbar sind.

22. Planetengetriebe nach einem der Ansprüche 11 bis 21, **dadurch gekennzeichnet, dass** das Sonnenrad (S2) des zweiten Planetenradsatzes (P2) über ein formschlüssiges Schaltelement (C) mit einem gehäusefesten Bauteil verbindbar ist.

23. Planetengetriebe nach einem der Ansprüche 11 bis 22, **dadurch gekennzeichnet, dass** der zweite Planetenradsatz (P2) und der dritte Planetensatz (P3) einen Planetenradsatz (P23) mit einem gemeinsamen Steg (ST23) und einem gemeinsamen Hohlrad (HR23) bilden, wobei auf dem Steg (ST23) gelagerte Planetenräder (PR23) mit dem Sonnenrad (S2) des zweiten Planetenradsatzes (P2) und dem Sonnenrad (S3) des dritten Planetenradsatzes (P3) kämmen.

24. Planetengetriebe nach Anspruch 23, **dadurch gekennzeichnet, dass** das Hohlrad (HR23) des Planetenradsatzes (P23) mit dem Steg (ST4) des vierten Planetenradsatzes (P4) verbunden ist.

25. Planetengetriebe nach einem der Ansprüche 11 bis 24, **dadurch gekennzeichnet, dass** wenigstens ein Teil der formschlüssigen Schaltelemente (F, B1, E1) über Schaltmuffen (8, 14), die ausgehend vom Gehäuse (2) in den Innenraum des Gehäuses (2) durch eine zwischen dem ersten Planetenradsatz (P1) und den weiteren Planetenradsätzen (P2 bis P4) verlaufenden Verbindungswelle (9) hindurch in Synchronringe (5, 13) der Schaltelemente (F, B1, E1) eingreifen, schaltbar ist.

## Claims

1. Planetary transmission (1), in particular dual-clutch transmission of planetary construction, having a plurality of planetary gear sets (P1, P2, P3, P4), having at least two frictional shifting elements (K1, K2) for connecting different power paths to a power flow and having a plurality of positive shifting elements (A to F) for setting various ratio stages in the power paths, wherein the frictional shifting elements (K1, K2) and the positive shifting elements (A to F) are arranged between shafts (S1 to S4, ST1 to ST4, HR1 to HR4) of the planetary gear sets (P1 to P4), a housing (2), a transmission input shaft (3) and a transmission output shaft (4) in such a way that gear stage changes can be accomplished by means of the frictional shifting elements (K1, K2) without interrupting the tractive effort, at least in a lower gear stage range ("1" to "6"), and wherein at least one of the frictional shifting elements (K1, K2) is embodied as a clutch, **characterized in that** the second planetary gear set (P2), a third planetary gear set (P3) and a fourth planetary gear set (P4), which are embodied with separate planetary gears (PR2 to PR4), form a 3-carrier, 5-shaft transmission apparatus.

2. Planetary transmission (1), in particular dual-clutch transmission of planetary construction, having a plurality of planetary gear sets (P1, P2, P3, P4), having at least two frictional shifting elements (K1, K2) for connecting different power paths to a power flow and having a plurality of positive shifting elements (A to F) for setting various ratio stages in the power paths, wherein the frictional shifting elements (K1, K2) and the positive shifting elements (A to F) are arranged between shafts (S1 to S4, ST1 to ST4, HR1 to HR4) of the planetary gear sets (P1 to P4), a housing (2), a transmission input shaft (3) and a transmission output shaft (4) in such a way that gear stage changes can be accomplished by means of the frictional shifting elements (K1, K2) without interrupting the tractive effort, at least in a lower gear stage range ("1" to "6"), and wherein at least one of the frictional shifting elements (K1, K2) is embodied as a clutch, **characterized in that** a second planetary gear set (P2), a third planetary gear set (P3) and a fourth planetary gear set (P4) form a reduced 3-carrier, 5-shaft-transmission apparatus in which two planetary gear sets (P2, P3) are connected to one another by means of dual planetary gears (P23) without stepping.

3. Planetary transmission according to Claim 1 or 2, **characterized in that** at least one of the frictional shifting elements (K2) is designed as a brake.

4. Planetary transmission according to one of Claims 1 to 3, **characterized in that** the frictional shifting elements (K1, K2) are embodied as wet or dry elements.

5. Planetary transmission according to one of Claims 1 to 4, **characterized in that** the positive shifting elements (A to F) are embodied as synchronized shifting elements.

6. Planetary transmission according to one of Claims 1 to 5, **characterized in that** the frictional shifting elements (K1, K2) are arranged in the area of the transmission input and the positive shifting elements (B1, B2, C, D, E1, E2, F) are arranged between the frictional shifting elements (K1, K2) and the transmission output shaft (4).

7. Planetary transmission according to one of Claims 1 to 6, **characterized in that** a first planetary gear set (P1) is designed as a simple planetary gear set.

8. Planetary transmission according to Claim 7, **characterized in that** one of the shafts (ST1) of the first planetary gear set (P1) can be connected to the transmission input shaft (3) by means of the second frictional shifting element (K2).

9. Planetary transmission according to Claim 7 or 8, **characterized in that** one of the shafts (ST1) of the first planetary gear set (P1) is connected to the transmission input shaft (3) and an additional shaft (S1) of the first planetary gear set (P1) can be braked by means of the second frictional shifting element (K2) relative to a component (2) fixed with respect to the housing.

10. Planetary transmission according to one of Claims 8 or 9, **characterized in that** one of the shafts (ST1) of the first planetary gear set (P1) is connected to the transmission input shaft (3) and an additional shaft (HR1) of the first planetary gear set (P1) can be brought into operative connection with a shaft (S2) of a second planetary gear set (P2) by means of the second frictional shifting element (K2).

11. Planetary transmission according to one of Claims 1 to 10, **characterized in that** the carrier (ST2) of a second planetary gear set (P2) is connected to the carrier (ST3) of a third planetary gear set (P3) and the annulus (HR2) of the second planetary gear set (P2) is connected to the annulus (HR3) of the third planetary gear set (P3).

12. Planetary transmission according to Claim 11, **characterized in that** the annulus (HR3) of the third planetary gear set (P3) is connected to the carrier (ST4) of the fourth planetary gear set (P4).

13. Planetary transmission according to either of Claims 11 or 12, **characterized in that** the sun gear (S3) of the third planetary gear set (P3) and the sun gear (S4) of the fourth planetary gear set (P4) are connected to one another.

14. Planetary transmission according to one of Claims 11 to 13, **characterized in that** the annulus (HR4) of the fourth planetary gear set (P4) can be connected by means of a positive shifting element (A) to a component (2) fixed with respect to the housing.

15. Planetary transmission according to one of Claims 11 to 14, **characterized in that** the carrier (ST4) of the fourth planetary gear set (P4) is connected to the transmission output shaft (4).

16. Planetary transmission according to one of Claims 11 to 15, **characterized in that** the carrier (ST2) of the second planetary gear set (P2) can be connected by means of a positive shifting element (D) to a component fixed with respect to the housing.

17. Planetary transmission according to one of Claims 11 to 16, **characterized in that** the sun gear (S2) of the second planetary gear set (P2) can be connected to the annulus (HR1) of the first planetary gear set (P1) by means of a positive shifting element (B2).

18. Planetary transmission according to one of Claims 11 to 17, **characterized in that** the sun gear (S2) of the second planetary gear set (P2) can be connected to the annulus (HR1) of the first planetary gear set (P1) and to the carrier (ST3) of the third planetary gear set (P3) by means of two positive shifting elements (B2, E2).

19. Planetary transmission according to one of Claims 11 to 18, **characterized in that** the sun gear (S3) of the third planetary gear set (P3) can be connected to the transmission input shaft (3) by means of a positive shifting element (B1) and the first frictional shifting element (K1).

20. Planetary transmission according to one of Claims 11 to 19, **characterized in that** the transmission input shaft (3) can be connected to the transmission output shaft (4) by means of the first frictional shifting element (K1) and a positive shifting element (F).

21. Planetary transmission according to one of Claims 11 to 20, **characterized in that** the sun gear (S3) of the third planetary gear set (P3) can be brought into operative connection with the carrier (ST1) of the first planetary gear set (P1) by means of two positive shifting elements (B1 and E2) and the two frictional shifting elements (K1, K2).

22. Planetary transmission according to one of Claims 11 to 21, **characterized in that** the sun gear (S2) of the second planetary gear set (P2) can be connected by means of a positive shifting element (C) to a component fixed with respect to the housing.

23. Planetary transmission according to one of Claims 11 to 22, **characterized in that** the second planetary gear set (P2) and the third planetary set (P3) form a planetary gear set (P23) with a common carrier (ST23) and a common annulus (HR23), wherein planetary gears (PR23) mounted on the carrier (ST23) mesh with the sun gear (S2) of the second planetary gear set (P2) and the sun gear (S3) of the third planetary gear set (P3).

24. Planetary transmission according to Claim 23, **characterized in that** the annulus (HR23) of the planetary gear set (P23) is connected to the carrier (ST4) of the fourth planetary gear set (P4).

25. Planetary transmission according to one of Claims 11 to 24, **characterized in that** at least some of the positive shifting elements (F, B1, E1) can be shifted by means of shifting collars (8, 14) which extend from the housing (2) into the interior of the housing (2), through a connection shaft (9) which runs between the first planetary gear set (P1) and the additional planetary gear sets (P2 to P4), and engage in synchronizing rings (5, 13) of the shifting elements (F, B1, E1).

## Revendications

1. Transmission planétaire (1), en particulier transmission à double embrayage de construction planétaire, comprenant plusieurs trains d'engrenages planétaires (P1, P2, P3, P4), au moins deux éléments de commutation (K1, K2) à engagement par friction pour connecter différents chemins de puissance dans un flux de force et comprenant plusieurs éléments de commutation (A à F) à engagement par correspondance géométrique pour ajuster différents étages de multiplication dans les chemins de puissance, les éléments de commutation (K1, K2) à engagement par friction et les éléments de commutation (A à F) à engagement par correspondance géométrique étant disposés entres des arbres (S1 à S4, ST1 à ST4, HR1 à HR4) des trains d'engrenages planétaires (PI à P4), un boîtier (2) ainsi qu'un arbre d'entrée de transmission (3) et un arbre de sortie de transmission (4) de telle sorte que des changements de rapport de vitesse puissent être effectués sans interruption de la force de traction au moyen des éléments de commutation (K1, K2) à engagement par friction au moins dans une zone de rapports de vitesse inférieure ("1" à "6"), et au moins l'un des éléments de commutation (K1, K2) à engagement par friction étant réalisé en tant qu'embrayage, **caractérisée en ce que** le deuxième train d'engrenages planétaires (P2), un troisième train d'engrenages planétaires (P3) et un quatrième train d'engrenages planétaires (P4), lesquels sont réalisés avec des engrenages planétaires (PR2 à PR4) séparés, constituent un dispositif de transmission à trois porte-satellites et cinq arbres.

2. Transmission planétaire (1), en particulier transmission à double embrayage de construction planétaire, comprenant plusieurs trains d'engrenages planétaires (P1, P2, P3, P4), au moins deux éléments de commutation (K1, K2) à engagement par friction pour connecter différents chemins de puissance dans un flux de force et plusieurs éléments de commutation (A à F) à engagement par correspondance géométrique pour ajuster différents étages de multiplication dans les chemins de puissance, les éléments de commutation (K1, K2) à engagement par friction et les éléments de commutation (A à F) à engagement par correspondance géométrique étant disposés entres des arbres (S1 à S4, ST1 à ST4, HR1 à HR4) des trains d'engrenages planétaires (P1 à P4), un boîtier (2) ainsi qu'un arbre d'entrée de transmission (3) et un arbre de sortie de transmission (4) de telle sorte que des changements de rapport de vitesse puissent être effectués sans interruption de la force de traction au moyen des éléments de commutation (K1, K2) à engagement par friction au moins dans une zone de rapports de vitesse inférieure ("1" à "6"), et au moins l'un des éléments de commutation (KI, K2) à engagement par friction étant réalisé en tant qu'embrayage, **caractérisée en ce qu'**un deuxième train d'engrenages planétaires (P2), un troisième train d'engrenages planétaires (P3) et un quatrième train d'engrenages planétaires (P4) constituent un dispositif de transmission réduit à trois porte-satellites et cinq arbres dans lequel deux trains d'engrenages planétaires (P2, P3) sont reliés l'un à l'autre sans gradation au moyen d'engrenages planétaires doubles (P23).

3. Transmission planétaire selon la revendication 1 ou 2, **caractérisée en ce qu'**au moins un des éléments de commutation (K2) à engagement par friction est réalisé en tant que frein.

4. Transmission planétaire selon l'une quelconque des revendications 1 à 3, **caractérisée en ce que** les éléments de commutation (K1, K2) à engagement par friction fonctionnent à sec ou sont à fonctionnement humide.

5. Transmission planétaire selon l'une quelconque des revendications 1 à 4, **caractérisée en ce que** les éléments de commutation (A à F) à engagement par correspondance géométrique sont réalisés en tant qu'éléments de commutation synchronisés.

6. Transmission planétaire selon l'une quelconque des revendications 1 à 5, **caractérisée en ce que** les éléments de commutation (K1, K2) à engagement par friction sont disposés dans la région de l'entrée de la transmission et les éléments de commutation (B1, B2, C, D, E1, E2, F) à engagement par correspondance géométrique sont disposés entre les éléments de commutation (K1, K2) à engagement par friction et l'arbre de sortie de transmission (4).

7. Transmission planétaire selon l'une quelconque des revendications 1 à 6, **caractérisée en ce qu'**un premier train d'engrenages planétaires (P1) est réalisé en tant que train d'engrenages planétaires simple.

8. Transmission planétaire selon la revendication 7, **caractérisée en ce que** l'un des arbres (ST1) du premier train d'engrenages planétaires (P1) peut être relié à l'arbre d'entrée de transmission (3) au moyen du deuxième élément de commutation (K2) à engagement par friction.

9. Transmission planétaire selon la revendication 7 ou 8, **caractérisée en ce que** l'un des arbres (ST1) du premier train d'engrenages planétaires (P1) est relié à l'arbre d'entrée de transmission (3), et un autre arbre (S1) du premier train d'engrenages planétaires (P1) peut être freiné contre une pièce structurelle (2) solidaire du boîtier au moyen du deuxième élément de commutation (K2) à engagement par friction.

10. Transmission planétaire selon la revendication 8 ou 9, **caractérisée en ce que** l'un des arbres (ST1) du premier train d'engrenages planétaires (P1) est relié à l'arbre d'entrée de transmission (3), et un autre arbre (HR1) du premier train d'engrenages planétaires (P1) peut être amené en liaison fonctionnelle avec un arbre (S2) d'un deuxième train d'engrenages planétaires (P2) au moyen du deuxième élément de commutation (K2) à engagement par friction.

11. Transmission planétaire selon l'une quelconque des revendications 1 à 10, **caractérisée en ce que** le porte-satellites (ST2) d'un deuxième train d'engrenages planétaires (P2) est relié au porte-satellites (ST3) d'un troisième train d'engrenages planétaires (P3) et **en ce que** la couronne (HR2) du deuxième train d'engrenages planétaires (P2) est reliée à la couronne (HR3) du troisième train d'engrenages planétaires (P3).

12. Transmission planétaire selon la revendication 11, **caractérisée en ce que** la couronne (HR3) du troisième train d'engrenages planétaires (P3) est reliée au porte-satellites (ST4) du quatrième train d'engrenages planétaires (P4).

13. Transmission planétaire selon la revendication 11 ou 12, **caractérisée en ce que** la roue solaire (S3) du troisième train d'engrenages planétaires (P3) et la roue solaire (S4) du quatrième train d'engrenages planétaires (P4) sont reliées l'une à l'autre.

14. Transmission planétaire selon l'une quelconque des revendications 11 à 13, **caractérisée en ce que** la couronne (HR4) du quatrième train d'engrenages planétaires (P4) peut être reliée à une pièce structurelle (2) solidaire du boîtier au moyen d'un élément de commutation (A) à engagement par correspondance géométrique.

15. Transmission planétaire selon l'une quelconque des revendications 11 à 14, **caractérisée en ce que** le porte-satellites (ST4) du quatrième train d'engrenages planétaires (P4) est relié à l'arbre de sortie de transmission (4).

16. Transmission planétaire selon l'une quelconque des revendications 11 à 15, **caractérisée en ce que** le porte-satellites (ST2) du deuxième train d'engrenages planétaires (P2) peut être relié à une pièce structurelle solidaire du boîtier au moyen d'un élément de commutation (D) à engagement par correspondance géométrique.

17. Transmission planétaire selon l'une quelconque des revendications 11 à 16, **caractérisée en ce que** la roue solaire (S2) du deuxième train d'engrenages planétaires (P2) peut être reliée à la couronne (HR1) du premier train d'engrenages planétaires (P1) au moyen d'un élément de commutation (B2) à engagement par correspondance géométrique.

18. Transmission planétaire selon l'une quelconque des revendications 11 à 17, **caractérisée en ce que** la roue solaire (S2) du deuxième train d'engrenages planétaires (P2) peut être reliée à la couronne (HR1) du premier train d'engrenages planétaires (P1) et au porte-satellites (ST3) du troisième train d'engrenages planétaires (P3) au moyen de deux éléments de commutation (B2, E2) à engagement par correspondance géométrique.

19. Transmission planétaire selon l'une quelconque des revendications 11 à 18, **caractérisée en ce que** la roue solaire (S3) du troisième train d'engrenages planétaires (P3) peut être reliée à l'arbre d'entrée de transmission (3) au moyen d'un élément de commutation (B1) à engagement par correspondance géométrique et du premier élément de commutation (K1) à engagement par friction.

20. Transmission planétaire selon l'une quelconque des revendications 11 à 19, **caractérisée en ce que** l'arbre d'entrée de transmission (3) peut être relié à l'arbre de sortie de transmission (4) au moyen du premier élément de commutation (K1) à engagement par friction et d'un élément de commutation (F) à engagement par correspondance géométrique.

21. Transmission planétaire selon l'une quelconque des revendications 11 à 20, **caractérisée en ce que** la roue solaire (S3) du troisième train d'engrenages planétaires (P3) peut être amenée en liaison fonctionnelle avec le porte-satellites (ST1) du premier train d'engrenages planétaires (P1) au moyen de deux éléments de commutation (B1 et E2) à engagement par correspondance géométrique et des deux élément de commutation (K1, K2) à engagement par friction.

22. Transmission planétaire selon l'une quelconque des revendications 11 à 21, **caractérisée en ce que** la roue solaire (S2) du deuxième train d'engrenages planétaires (P2) peut être reliée à une pièce structurelle solidaire du boîtier au moyen d'un élément de commutation (C) à engagement par correspondance géométrique.

23. Transmission planétaire selon l'une quelconque des revendications 11 à 22, **caractérisée en ce que** le deuxième train d'engrenages planétaires (P2) et le troisième train d'engrenages planétaires (P3) forment un train d'engrenages planétaires (P23) avec un porte-satellites (ST23) commun et une couronne (HR23) commune, des engrenages planétaires (PR23) montés sur le porte-satellites (ST23) s'engrenant avec la roue solaire (S2) du deuxième train d'engrenages planétaires (P2) et la roue solaire (S3) du troisième train d'engrenages planétaires (P3).

24. Transmission planétaire selon la revendication 23, **caractérisée en ce que** la couronne (HR23) du train d'engrenages planétaires (P23) est reliée au porte-satellites (ST4) du quatrième train d'engrenages planétaires (P4).

25. Transmission planétaire selon l'une quelconque des revendications 11 à 24, **caractérisée en ce qu'**au moins une partie des éléments de commutation (F, B1, E1) à engagement par correspondance géométrique peut être commutée au moyen de manchons de commande (8, 14) qui s'engagent dans des bagues de synchronisation (5, 13) des éléments de commutation (F, B1, E1), depuis le boîtier (2) dans l'espace intérieur du boîtier (2), à travers un arbre de liaison (9) s'étendant entre le premier train d'engrenages planétaires (P1) et les autres trains d'engrenages planétaires (P2 à P4).
